# EUROPEAN PATENT SPECIFICATION

(11) **EP 1 325 836 B1**
(45) Date of publication and mention of the grant of the patent: **18.07.2007**
(21) Application number: 02076388.4
(22) Date of filing: 02.04.2002
(51) Int. Cl.: B60N 2/26, B60N 2/06, B60N 2/42, B60N 2/24, B62D 21/15

(54) **Easy ejector seat with skeletal crash safety beam**
Leichtgängiger Ausstosser mit skelettartigem unfallsicheren Balken
Ejecteur à mouvement aisé avec poutre composée de sécurité en cas d'accident

(30) Priority: 08.03.2002 US 362450 P; 01.04.2002 US 109674 P; 20.02.2002 US 357644 P; 03.12.2001 US 338466 P; 14.11.2001 US 332419 P; 26.04.2001 US 286629 P; 09.04.2001 US 282105 P; 02.04.2001 US 280470 P
(43) Date of publication of application: 09.07.2003
(60) Divisional application: 07010864.2
(73) Proprietor: Rajasingham, Arjuna Indraeswaren, Dr., 103 34 Stockholm (SE)
(72) Inventor: Rajasingham, Arjuna Indraeswaren, Dr., 103 34 Stockholm (SE)

(56) References cited:
- DE-A- 19 744 978
- FR-A- 2 645 477
- GB-A- 2 300 391
- US-A- 2 148 950
- US-A- 2 710 222
- US-A- 2 777 531
- US-A- 3 071 407
- US-A- 3 944 277
- US-A- 4 512 604
- US-A- 5 435 618
- US-A- 5 464 266
- US-A- 5 660 428
- US-A- 5 671 968
- US-A- 6 059 354

## Description

### Field of Invention

The present invention defines a means to incorporate in passenger motor vehicles, unique safety arrangements particularly for lateral or side impacts that provide energy absorption by the mass of the vehicle but decouple and thereby protect the occupant by differential treatment to the remaining mass of the vehicle.

### Background of Invention

The design of vehicles have limited performance in protecting occupants particularly in lateral impact that imposes severe acceleration on and lateral intrusion of the vehicle. This is partly because the occupants undergo the same impact related accelerations and decelerations as the remaining parts of the vehicle, as space limitations don't allow for "crumple zones" as in the case of impact protection for frontal collisions. Occupants are particularly vulnerable to side impacts as it is not easy for them to take preemptive measures as with frontal collisions where there is speed control and directional control available.

Another area of interest in passenger vehicles is to provide, in synergy with the above contributions, utility and comfort of occupants.

US-A-2,777,531 and FR-A-2 645 477 both represent seats that are pivotally supported at a fixed point and therefore are limited to motion along a circle about the fixed pivot. Moreover, this art is limited to embodiments that can be attached pivotally and therefore to a single point on the bottom (or side) of the seat and this point being displaced along the axis of the pivot from the center of mass of the occupant which is in the interior of the occupant, resulting in large loadings on the attachment point orthogonal to the axis. In addition, neither of these pieces of art represent the relocation of the occupant as required in a limited space as in a vehicle, but simply represent pivotal motion about a fixed pivot which cannot be implemented in the constrained space of most vehicles. GB-A-2,300,391 refers to two sets of orthogonal shock absorbers that cannot reorient through an angular displacement but only provide very limited linear displacement in the horizontal plane. US-A-6,059,354 provides further information with regard to Figs 1 - 4.

### Summary

The present invention provides a structure and a method for proctecting the occupant in a vehicle by reorienting the occupant and thereby reducing possible injury from accelerations and crush while diverting the impact energy to the remaining mass of the vehicle. This structure is particularly useful in lateral collisions. Moreover the structure synergistically provides a means for utilitarian easy access to the vehicle for occupants. Further embodiments of the invention according to claims 1 and 17 are referred to in the dependent claims.

### Brief description of Drawings

Figures 1 - 4 are not part of the invention and aid in its understanding.
Figures 5 - 8 show an embodiment of aspects of the invention with the occupant support mechanism being a child or infant support mechanism (CISM). The lateral sliding arrangements, shock absorbtion devices, decoupling arrangements for such shock absorbing devices for egress and ingress and the CISM and its attachement means may be used in the invention.

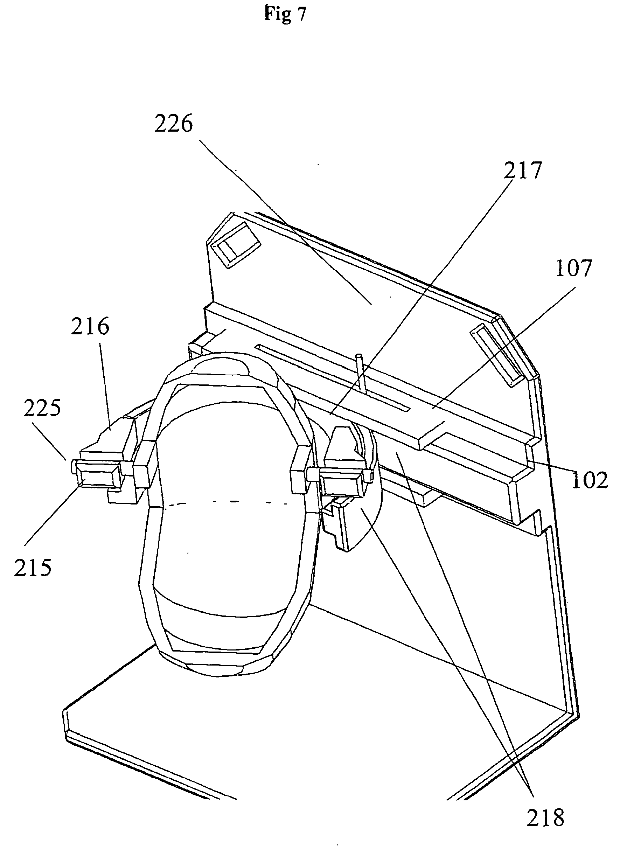

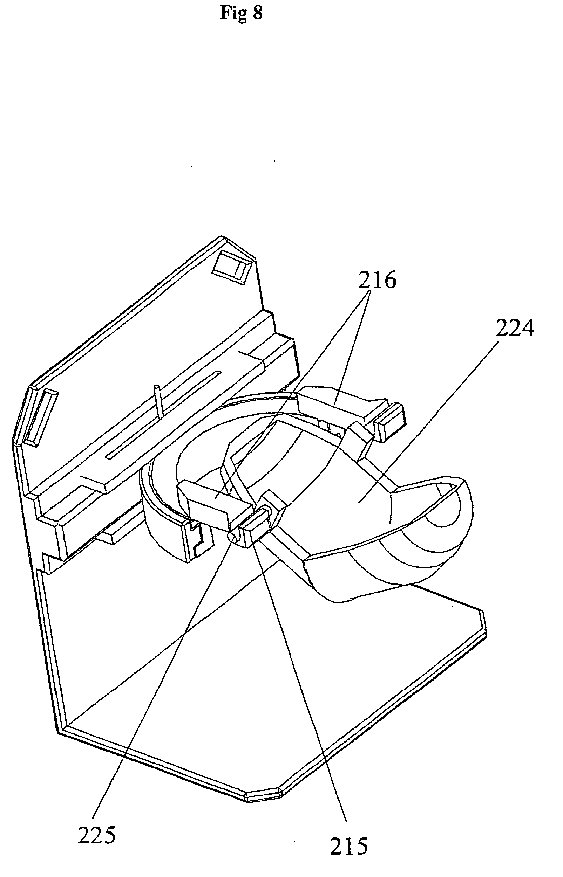

Fig 5 shows the normal operating position, Fig 8 shows the extended shock absorbers in a front impact for a forward facing CISM. The CISM will also rotate about the pivot support against damped rotational springs to orient the CISM with the head of the occupant lower to engage a safety harness, and the back of the occupant moved forward and upwards. Fig 6 shows the arrangement in the access position with the lock on the shock absorbers (not shown) removed, and the CISM support at the end of the sliding arrangement for easy access for loading and securing the CISM. Fig 7 shows the movement of the support elements for the CISM as it encounters a side impact on the left hand side.

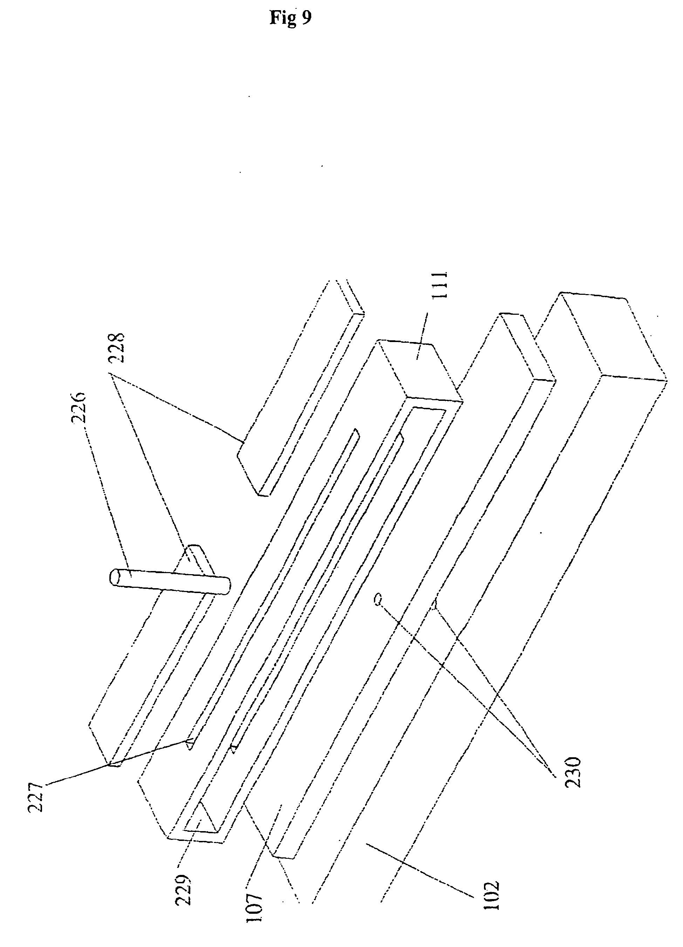

Fig 9 shows a cross-section of an embodiment of the safety beam lower element and the safety beam upper element which is integrated with the secondary slide as there is no impact decoupler, with the locking pin that locks the shock absorbing shock absorbers to the safety beam lower elements in the operating position.

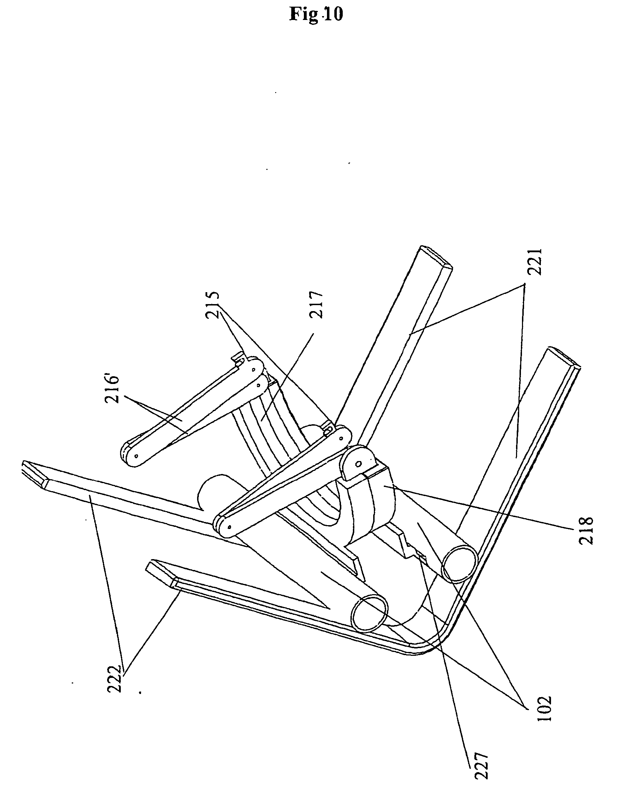

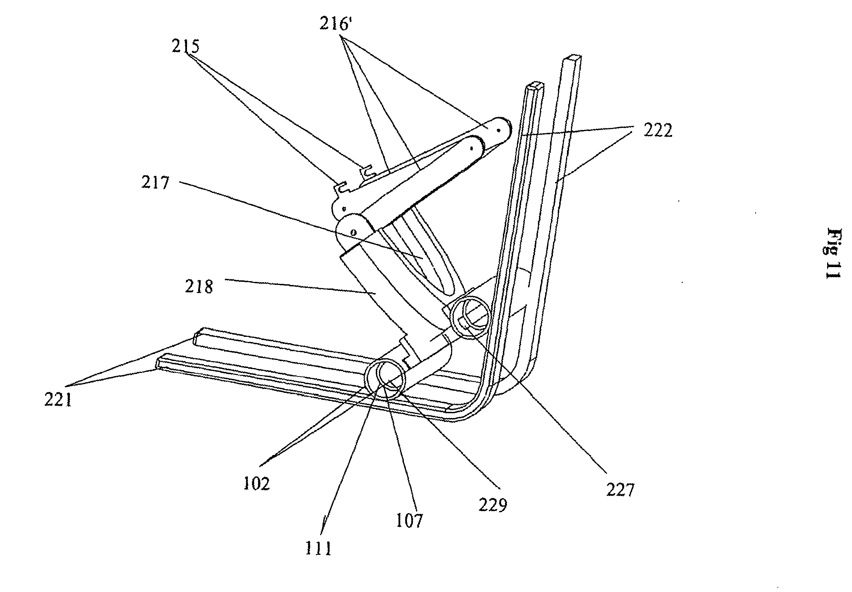

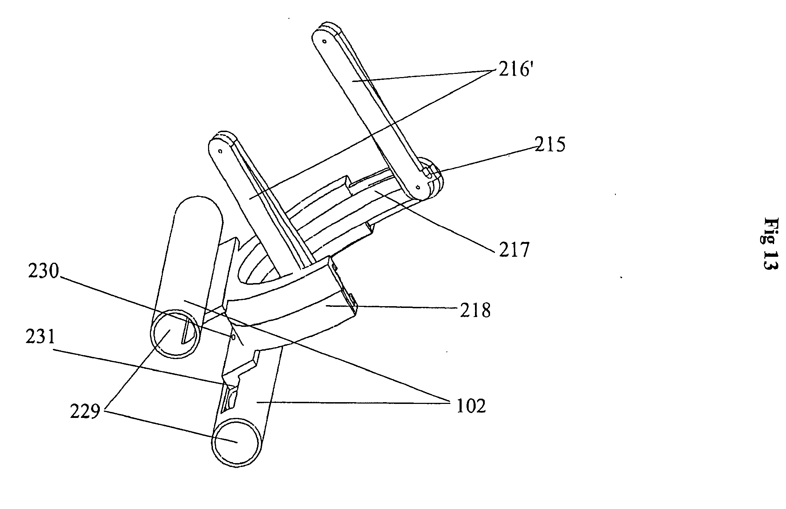

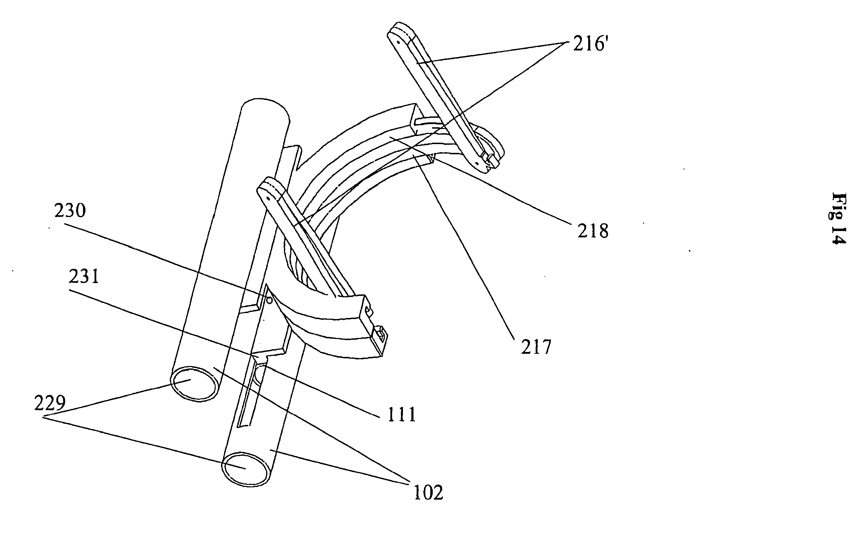

Figures 10 - 14 show embodiments of aspects of the invention. Here the lateral sliding arrangements with shock absorbers are inside a pair of tubes with the attachment to the occupant support mechanism enabled through a slot in the tube as shown. These may be used interchangeably with aspects of the invention. The attachment means to the occupant support may be used for a forward facing seat in a vehicle to protect the occupant in a rapid deceleration to the vehicle in the forward direction as illustrated in 128.

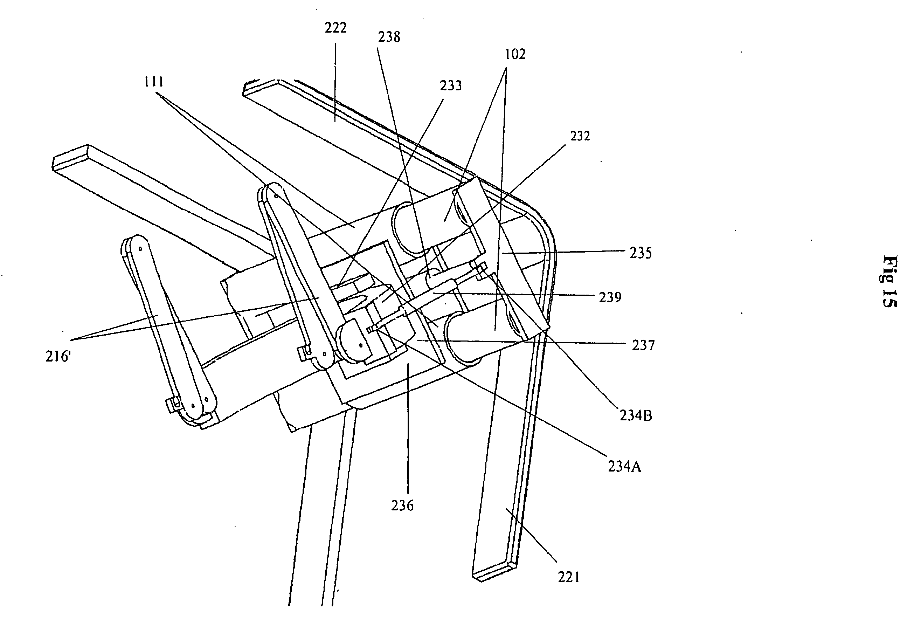

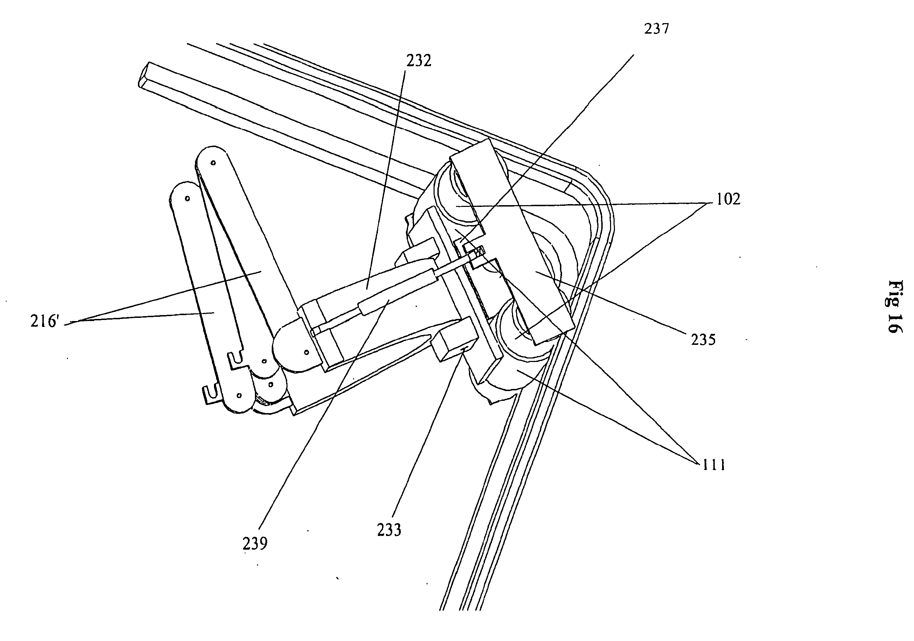

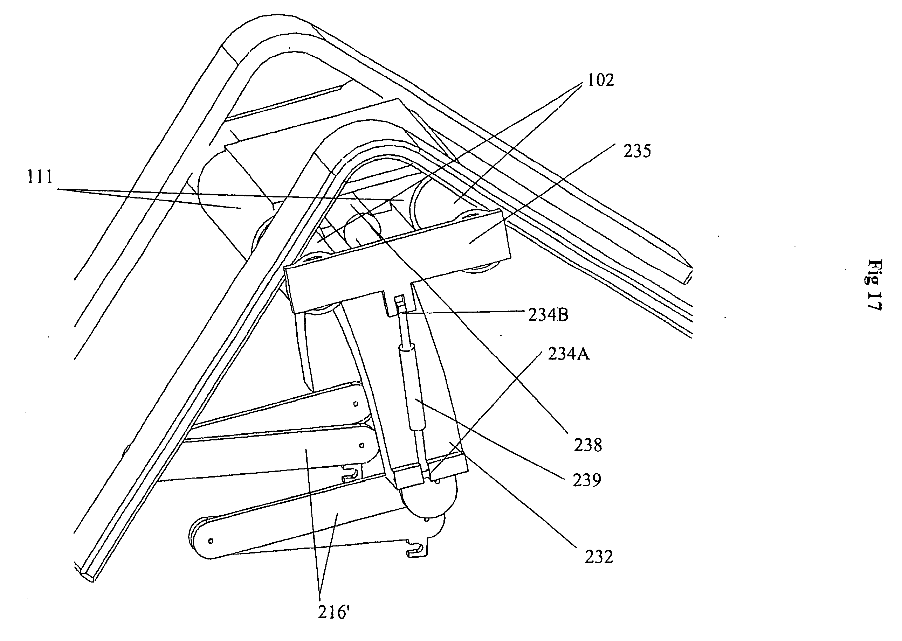

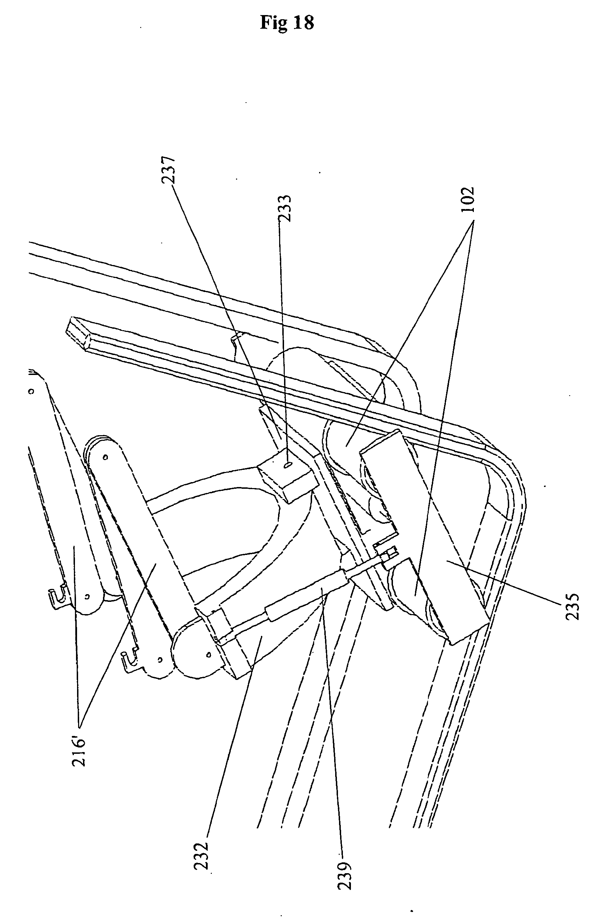

Figures 15 - 18, 20 and 21 show embodiments of the invention in different positions. Here tubular sliding arrangements are shown to reorient the occupant support mechanism about two points. The shock absorbtion devices are internal to one of the sliding arrangements and another that is separate and between two sliding devices.

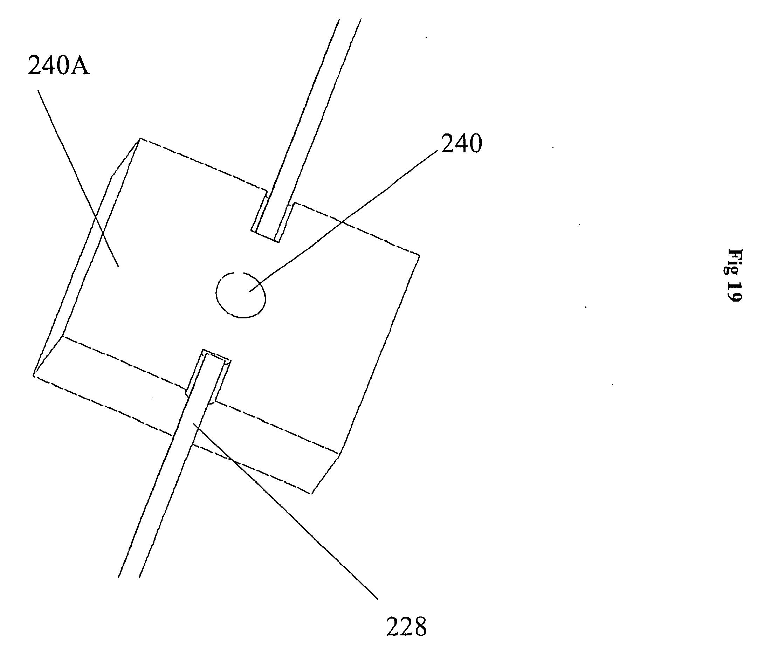

Figure 19, shows a connection means for shock absorbers that are compressive only such that the block with pin hole engages a pin that compresses one or the other of the shock absorbers while disengaging the other.

### List of reference numbers

- 101 Central Member of Indo-skeletal structure
- 102 Safety Beam Lower Element/Lower Primary Slide in some embodiments
- 103 Side impact shock absorbers
- 104 External Air Bags
- 105 Perforation Shields
- 106 Protector Shields
- 107 Safety Beam Upper Element/ Upper Primary slide in some embodiments
- 109 Multi-element contoured passenger seat (Also 224 for CISM)
- 110 Vehicle Shell/Body
- 111 Secondary Slides/Impact decouplers
- 112 Locking devices
- 112A Pivot for Protector shield
- 113 Proactive Velocity/Distance Detectors
- 114 Internal side impact airbag
- 215 Child or Infant Support Mechanism support (CISM support)
- 216 Extendable spring/damper loaded attachment for CISM support
- 217 Inner rotator for CISM support
- 218 Outer rotator (including attached impact decoupler/secondary slide 111)
- 221 Bottom seat support flange
- 222 Back seat support flange
- 223 Shoulder strap attachement for 3 point belt.
- 224 Child or Infant support mechanism (CISM)
- 225 CISM support pivots
- 226 Lock pin - Internal Airbag equivalents (IAE)shock absorber with Safety beam lower element
- 227 Pin slot for lateral impact movement
- 228 Internal Airbag equivalent/ shock absorber
- 229 Slot for housing Internal Airbag Equivalent/ shock absorbers
- 230 Pin Hole for registering Lock Pin
- 231 Support Key -secondary slide to outer rotator
- 232 CISM Support Bracket
- 233 Pivotal support for CISM Support Bracket
- 234A Pivot for Shock absorber attached to CISM
- 234B Pivot for Shock Absorber attached to CISM support bracket
- 235 Fixed Support for safety beam lower elements and shock absorbers
- 236 support for secondary slides, CISM support bracket and shock absorbers
- 237 Support flange between Secondary slide and shock absorber active ends
- 238 Shock absorbers- dual movable active end at center
- 239 Shock absorbers-dual movable extremes-expansion/compression.
- 240 Lock pin hole on dual shock absorber center support
- 240A - Dual Shock Absorber Center Support
- 241 Top lock flanges
- 242 Side lock flanges
- 243 Front lock flanges
- 244 Side support flange
- 245 Lateral Brace

### Description of Invention

The present invention provides a vehicle with a structure that synergistically incorporates two functions. First, during rapid deceleration as in an impact, a means to decouple the occupant environment from impact, and protect occupants while projecting the deceleration energy to the remaining mass of the vehicle, and second, utility to occupants, in egress and ingress even with the comfort of contoured surround seats or supports.

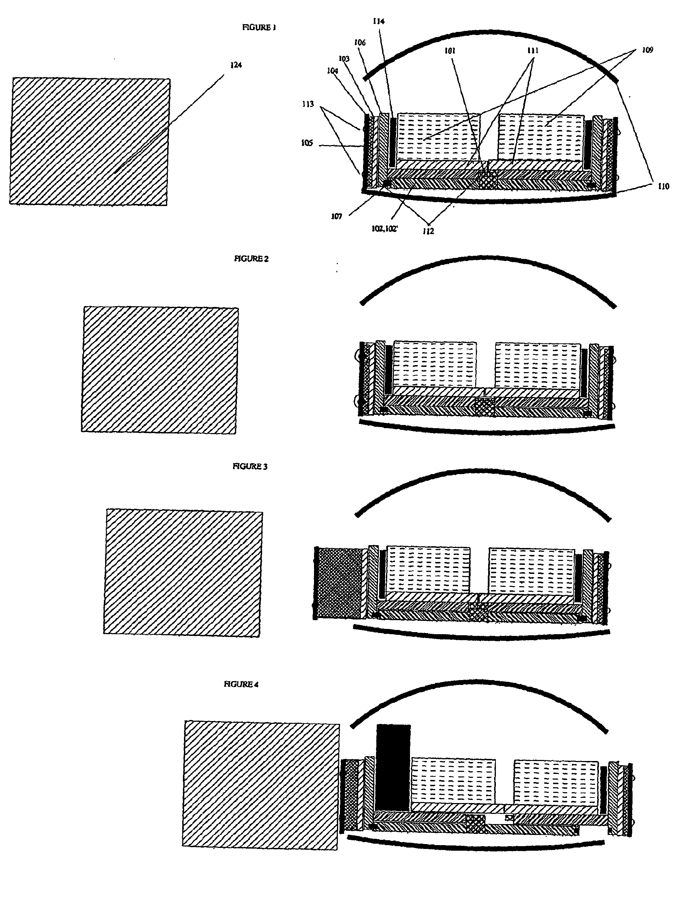

The following description of some of the components of a related embodiment aids in the understanding of the invention. The seating arrangement of a passenger vehicle is shown in Figure 1. The cross-section of the central member of the indo-skeletal structure (101) is fixed to the safety beam (102') and the lower primary slide (102). The Upper Primary slide (107), slides on the lower Primary slide (102). (The terms upper and lower being used for the slides to distinguish them and not representing a relative elevation of the slides). The Upper Primary Slide (107) locks into the Central member of the indo-skeletal structure (101) in the operating position with locking devices (112). The Upper Primary Slide (107), supports the secondary slide/Impact decouplers (111). In this embodiment this is firmly attached to the Upper Primary Slide until the impact when it is decoupled to slide away from the impact. The Secondary slide arrangement may use a friction based approach, or other approach , all of which are well disclosed in the background art. This embodiment has contoured surround Passenger Seats (109) that are mounted on the Secondary slides (111).

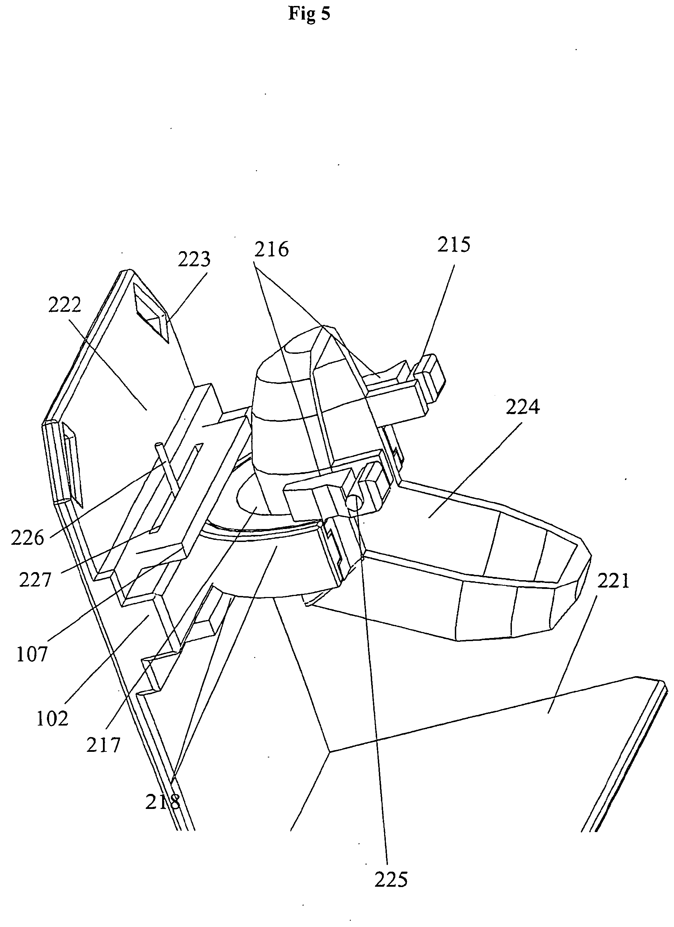

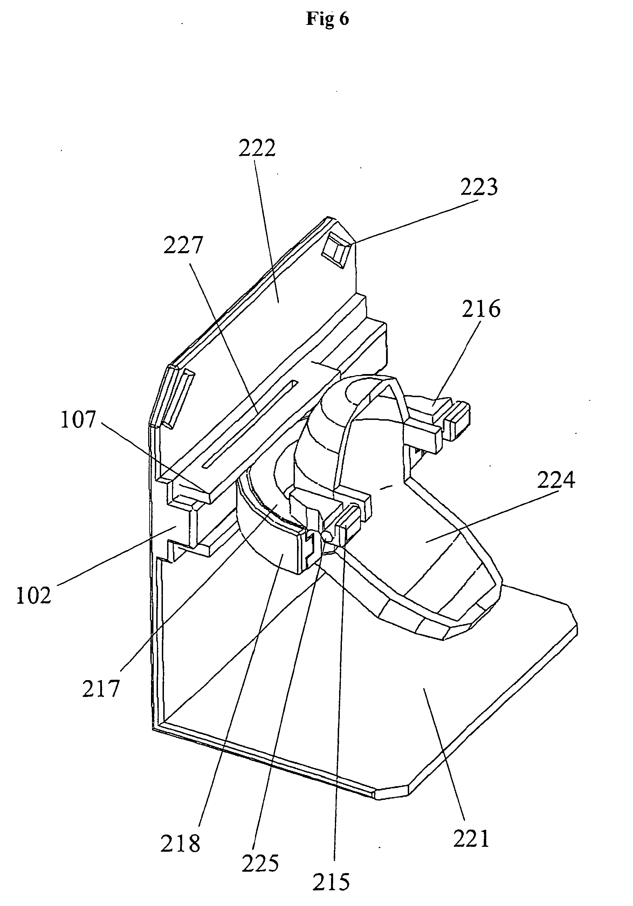

The seat (109 or 224) may be constructed with customizable multi-elements that conform to the desired shape and provide the desired support for the occupant. The safety harness may be designed to protect the passenger in head-on collisions by providing a soft barrier in close proximity to the body but not necessarily touching the body. The harness may be constructed of pliable but semi-rigid material (such as high strength nylon) to provide support in a head-on collision. A natural benefit of the arrangement of the harness and its supports is that lateral forces on the seat are also braced by the harness support in the operating position. Moreover the seat (109/224) may be constructed with reinforcing on the sides to further protect the passenger from crush injuries. This seat (109/224) provides surround support for the passenger particularly desirable on winding roads. In Figure 2, 3 the impacting object has moved closer and in Figure 4, after the impact, the Secondary slides (111) decouple and slide the passenger seats (109) with the passengers away outside the path of the impact forces.

There are several possible embodiments of the invention which includes a possible child or infant support mechanism (CISM) as the occupant/passenger support mechanism.

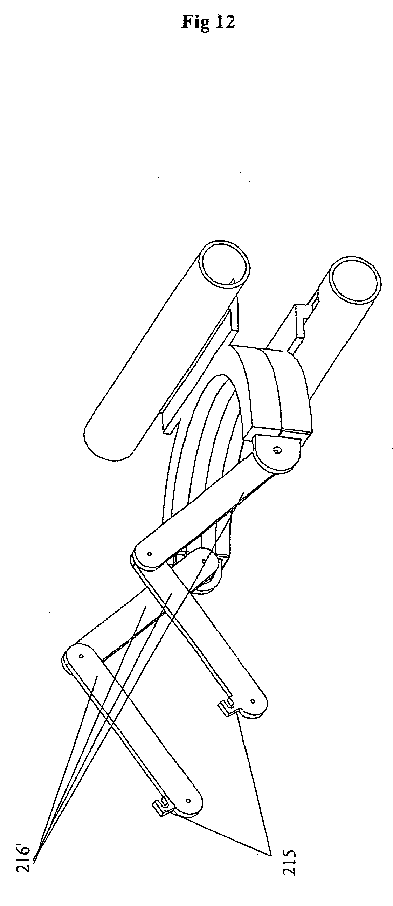

For frontal collision protection these embodiments may have the following arrangements. One such embodiment has the CISM 224 comprising two support pins 225 that are located above the center of mass of the occupant and the support mechanism structure and engages a rotary damped spring with shock absorbing device (not shown) when inserted into the supports 215. and locked therein. The damped spring mechanism prevents rotary motion of the pins in the supports except under front collision conditions when the torque generated by the inertial mass of the occupant and the support mechanism structure with a center of mass lower than the pivot, swing the CISM down and forward thereby bringing the occupant closer to a foetal position with the reactive force for deceleration applied to the occupant significantly from the lower support structure of the CISM. The final position of course is designed not to bring the occupant to a position that would cause excessive spinal compression. The head and neck on the other hand, will engage and be protected by a safety harness as disclosed in this invention (not shown) and the body will face substantially away from the impact. Furthermore in a front impact, the embodiment in Fig 5 - 8 has the extendable spring damper 216 which contains a damped spring may extend to increase shock absorption, while embodiments in Fig 10 - 14 and Fig 15-18 have a pivotally mounted arrangement that extends as shown in for example Fig 12 under front impact. The Arms that constitute 216 Extendable Spring Damper loaded attachment for CISM support in these latter embodiments are air damper (internal airbag equivalents) loaded for rotary movement. For the embodiments in Fig 10 - 14 and Fig 15-18, the mounting of the CISM can be rigid in the operating position i.e. the support of the CISM support pivots 225 on the support 215 may be rigidly fixed in the operating position, and support may even be on multiple points on the arm of 216 directly supporting the CISM, as the pivotal movement may be restricted to the elbow of 216 arms and its attachment to the support members (the Outer rotator 218 in some embodiments or Support Bracket 232 in others). In both the linear and rotational embodiments of 216 noted above, we have movement restricted to a position that orients the occupant to maximize support from the seat bottom and for head and neck support from the safety harness.

The embodiments of the invention presented in Figures 5-9, 10 - 14, have safety beam lower and upper elements (as slides in some embodiments) - 1 attached to the impact decoupler/secondary slide -1 as disclosed herein (sliding arrangement 1), and a safety beam lower and upper elements (as slides in some embodiments) -2 attached to the impact decoupler secondary slide -1 with its own impact decoupler secondary slide -2 (sliding arrangement 2) which is attached to the passenger support mechanism that may be an CISM or other passenger support mechanism. The embodiments in Fig 5 - 8 use a first rectangular section linear sliding arrangement, and a second rectangular section curvilinear sliding arrangement (inner and outer rotators) both with shock absorbtion with shock absorbers (which may be air shock absorbers or similar devices). The embodiments in Figs 10-14 use Cylindrical linear sliding arrangements (sliding arrangement 1) and a rectangular curvilinear sliding arrangement (sliding arrangement 2).

The embodiments in Figs 5-9 have the extendable air damper loaded attachment 216 attached to the Inner rotator for the CISM 217 that mates with the Outer rotator and is slidably mounted thereto with shock absorbers attached between these two elements (not shown) to keep the inner rotator in the operating position as shown in Fig 5, but to rotate as shown in Fig 7 under lateral impact, thereby orienting to the extent possible the occupant to face away from the impact and to increase the resistive force accelerating the occupant to be applied by the body of the CISM 224. The Outer rotator 218 has the secondary slide 111 attached to it. The secondary slide impact decoupler in turn is detachably attached to the safety beam upper element 107, which is slidably mounted to the safety beam lower element 102 which is rigidly attached to the fixed body members of the vehicle which includes the rigidly attached seat. Under a predetermined shear force the secondary slide 111 of 218 is designed to detach from the safety beam upper element 107 and thereafter be slidably attached thereon. Under operating conditions as shown in Fig 5 the Locking pin is in place. Fig 9 shows a representation of the components of the lateral slide assembly. Such an assembly may be used for the linear or curvilinear sliding arrangement described herein. When the locking pin 226 engages the slot 227 in the secondary slide and the holes 230 in the safety beam lower and upper elements, the CISM is locked from lateral movement in the operating position. The Shock absorbers 228 are uncompressed and either one of them is ready for compression in the event of a side impact on the relevant side. When a side impact is encountered, the inertial mass of the CISM and the occupant may provide a lateral force larger than the critical shear force to decouple the impact decoupler between the secondary slide 111 and the safety beam upper element 107, and thereafter the CISM and attached elements to the Secondary slide 111 move against the compression of the air shock absorber or other device in the Shock absorber 228. This provides shock absorption in lateral impact to the occupant in the CISM. Simpler versions of this arrangement that could be used in other embodiments may integrate the secondary slide 111 and the Safety beam upper element 107, with a matching slot in the safety beam upper element as present in the secondary slide 111. When the pin is in place, in this simpler arrangement the safety beam lower element is engaged to the ends of the two internal airbags this alone keeps the arrangement in the operating position. There is no impact decoupling in this simpler arrangement. Fig 6 shows a loading or access position. This is a convenient position to load or unload the CISM with the occupant. It is achieved by removing the locking pin and sliding the Safety Beam Upper element 107 on the safety beam lower element 102.

Yet another embodiment as shown in Fig 10 - 14, use cylindrical slides for lateral impact protection. Here Safety Beam Lower Elements 102 slidably support cylindrical safety beam Upper elements 107, which in this embodiment is a part of the secondary slide 111 (the safety beam upper element 107 may in other embodiments be detachably coupled to the impact decoupler secondary slides as disclosed in this invention). In this embodiment, the pin that locks the secondary slide (and safety beam upper element) to the shock absorbers 228 (not shown), which are in turn housed in the cylindrical slot 229, within the secondary slide and the safety beam lower element, is located in a pin hole drilled through 231- the support key for the outer rotator from the secondary slide. The pin when locked engages a hole between two sections of the shock absorbers that straddle the hole. The pin if engaged will therefore compress one or the other of the inside airbag equivalents in the event of the secondary slide moving under impact conditions relative to the safety beam lower elements 102 and the fixed elements of the vehicle, providing shock absorption. However if the pin is withdrawn, the secondary slide will not engage the shock absorbers 228 and will therefore slide easily to a loading or access position nearer the door, for placing the CISM in its supports or removing the CISM from its supports. A similar pin may be mounted on the outer rotator and engage between a pair of shock absorbers 228 that are mounted inside slots between the inner and outer rotator and engaging on their outer end, the inside rotator. When the pin is engaged, it provides a surface resisting the movement of one of the shock absorbers and thereby provides shock absorption under impact. However, when the pin is retracted back into the outer rotator, it allows free sliding between the inner and outer rotators, thereby allowing the CISM mounts to be positioned to easily attach the CISM in a loading position. Moreover, in this embodiment a further refinement would be a cable activated lever that operated all the pins - in the linear and curvilinear sliding arrangements (similar to a bicycle brake cable) for ease of operation of loading and unloading the occupants.

Embodiments of the invention shown in Figs 15 - 18, use cylindrical linear slides for sliding arrangement 1 and pivot the CISM support Bracket 232 in the center and control its movement by a shock absorber with a sliding arrangement incorporated. These embodiments are of course general to any occupant support mechanism including seats. In these embodiments of the invention cylindrical linear slides are used for lateral relocation along with using a pivoting arrangement between the CISM support bracket 232 and the support member 236 (support for secondary slides, CISM support bracket and shock absorbers) and a dual shock absorber device that allows compression and expansion 239 mounted between the edge of the CISM support bracket 232 and the Fixed Support for safety beam lower elements and shock absorbers 235. The 232 may have lateral support flanges for the CISM such that the CISM nests within the 232 when in the operating position without obstructing forward deployment of the CISM in a front impact. This embodiment has two safety beam lower elements that each slidably support on their outer surface one of the two secondary slides 111 (this embodiment uses the reduced form where the secondary slides are integrated with the safety beam upper element without impact decoupling as disclosed herein) The secondary slides are connected together and pivotally support the CISM support bracket with the support for secondary slides, CISM support bracket and shock absorbers 236. The shock absorbers in this embodiment is a dual element that can be compressed in both directions 238. Its center which is the active end that may be moved relative to its extreme ends under impact forces, is mounted to a support flange 237. This mount may be disconnected using a pin or other locking device to disengage the shock absorbers to aid loading and unloading the occupant in the CISM. (An alternative embodiment uses single Shock absorbers 228 that only compress but don't expand between their ends. Two of these may be substituted for 238, each rigidly mounted at the outer end to the fixed support flange 235 with their pistons pointing inwards and engaged into the circular slots as shown in the cut way diagram Fig 19. The Pin hole 240 for engaging the secondary slide and its attachments is also shown. This arrangement allows a single Shock absorber to compress while not affecting the other as the pistons simply engage the slots and are not fixed within the slots.

In the event of a lateral impact, the inertial mass of the CISM with occupant will exert a force through its center of mass that is within the substantially semicircular CISM support bracket, and will therefore compress the Shock absorbers 238 attached to the Secondary slide. However, as the second shock absorber and sliding arrangement 239 is attached to the edge of the CISM support bracket this too will undergo extension or contraction depending on the side on which the impact was received. The reactive force from the latter shock absorber will however rotate the CISM to face away from the impact.

Notably there are several possible embodiments of this CISM or occupant support mechanism in this invention. Elements of these may be used in different combinations with functionally equivalent features presented herein and not all elements may be present in any one embodiment. For example, any of the front impact arrangements as noted above may be used with any of the lateral impact arrangement noted above.

Moreover, There are a number of variations of the CISM support in this invention. For example the safety beam lower element may be mounted on the bottom seat support flange 221, back seat support flange or on both. There may be multiple safety beam lower elements each with their own safety beam upper elements and other disclosed elements attached thereon, working in parallel to provide greater support. For example, Figs 10-14 illustrate two linear safety beam lower elements with their respective upper elements and secondary slides. Notably an embodiment with the safety beam lower element attached to the bottom seat support flange 221 and comprising inner and outer rotators for lateral impact, will under side impact rotate the occupant to face away from the impact (the center of mass of the CISM and the occupant needs to be arranged to be below the pivot) but in so doing will incline the occupant to the vertical.

Each of these variations in the embodiment have advantages and disadvantages that performance, geometry and cost will influence. Some of these embodiments may be removable from the vehicle and attached to the seat with 3 point seat belts for example with the shoulder strap attachment points 223 on the Back seat support flange 222. Others may be designed into the vehicle as in for example a part of the center arm rest in the rear seat of a vehicle. The attachment of these embodiments of the invention may also be with methods available in the background art such as "Isofix" fasteners or other lath arrangements such as with the top lock flanges 241, the side lock flanges 242 and front lock flanges 243.

The side impact performance will in particular will be aided with the side lock flanges 242 being locked into support points attached to the fixed members of the vehicle between the seat cushions on the back or front seats of the vehicle.

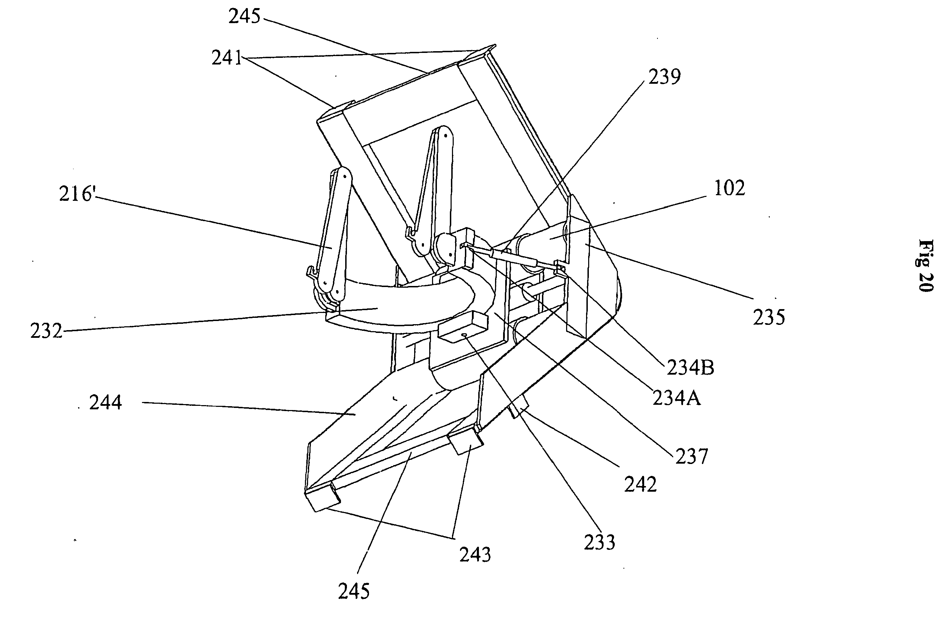

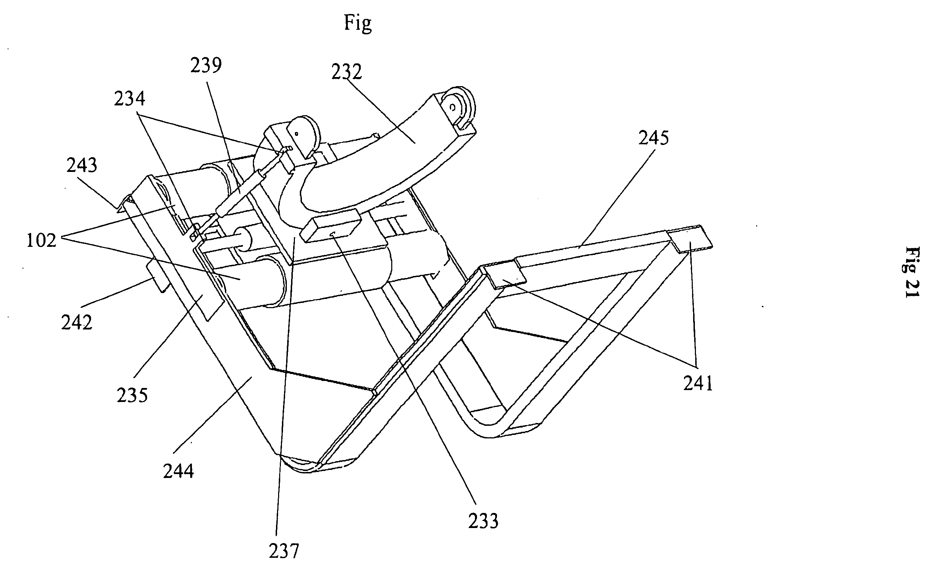

The side support flanges 244, will aid in bracing the structure and helping transfer the load from the shock absorbing members to the structure and the lock flanges or 3 point seat belt as available in the vehicle. The embodiments illustrated in Fig 20, 21 show the safety beam lower element attached (by bolts not shown through the Side Support flange to the support member for the internal airbag equivalent that controls the rotational motion. However, other embodiments may have the side flanges as shown attached to the safety beam lower elements in Figs 15 - 18, and the entire module attached to the side support flanges and the other structural members either in the front or rear facing arrangements for the CISM.

Some embodiments of the invention may have the safety beam upper and lower elements along with the secondary slides, shock absorbers and attached hardware, removable and attachable at the front end of the support structure thereby allowing the installation of a rearward facing child seat Fig 21. Such a seat may not require a front impact protection mechanism and therefore many such embodiments may have the CISM support bracket directly connected to the CISM. However, further refinements of the invention may have the CISM in two sections - the first to support the head, neck, thorax, lumbar regions and the pelvis of the child and the second to support the lower limbs of the child. The CISM support bracket may be connected to the first of these and the second which supports a smaller load may be pivotally mounted to the upper section of the CISM , thereby allowing a reclining position for the child. For older children - up to about 40 Ibs i.e. about 18 kg, leg room in the rearward facing position becomes important. Embodiments that have a removable car seat cushion with the mountings and locks as discussed below this level will facilitate this.

As much of the complexity of the invention is external to the CISM, the CISM may be constructed to be very light and made inexpensively, thereby allowing a change in CISM and its support members that attach to the CISM support bracket, to suit the child as it grows older.

Finally the CISM support embodiments disclosed here include alternative support structures outside the automobile that can receive the same support pivots or lock points, thereby making the loading and unloading of children easier. These external support structures include all types of strollers and bicycle trailers that have the support members that lock to the pivots or lock points. Some such alternative structures may replicate the impact protection of the CISM support in the vehicle for use in bicycle trailers and strollers.

Many aspects of the embodiments of the invention for the Child support Mechanism as the passenger support mechanism may be used for adult passengers as well. The cylindrical safety beam lower elements as in the Child support embodiment may be modified to attach either directly or pivotally to the vehicle central body member (pivotal mounting can contribute to shock absorbtion of the seat) or mounted on a member that can raise/lower and tilt the seats by suitable slidable and pivotal attachment to the fixed central member using well known approaches in the background art. The remaining aspects of the embodiment for the child support case may be replicated after suitable scaling. In addition, with gull wing doors or other doors that provide clearance of the Passenger support mechanisms as well as doors attached to the secondary slides as disclosed herein, the Passenger support mechanisms can slide right out of the vehicle as disclosed elsewhere in this invention. The Front collision protection arrangement for the Child support case will be most relevant for the adult passenger support mechanism case when the steering wheel and other hardware are not in the way of a movement forward of the Passenger Support Mechanism. This may be the case in drive -by-wire vehicles where the steering and other controls are mounted on a safety shield as disclosed herein.

### Finally some of the special technical features include:

An arrangement synergistically provides a means for utilitarian easy access to the vehicle for passengers and drivers alike and allows the installation of multi-element surround contoured seats for the comfort and protection of passengers.

A method for improving the access and safety for occupants in a vehicle comprising: Moving the occupant from a first position wherein said first position is the safe operating position, and a second position, wherein said second position is an access position. Moreover a method with this feature that in addition where the movement from the first position to the second position comprises lateral movement of the occupant. Furthermore a method of moving from the above noted first position to the second position wherein moving from the first position to the second position comprises rotational movement of the occupant.

A method for utilizing the torque generated from a force resulting from a change in velocity of the occupant and Child/Infant support mechanism, about a predetermined axis to reorient said occupant from the operating position to a secure position immediately following impact.

## Claims

1. A vehicle structure for protecting an occupant in an operating position, comprising:
an occupant support mechanism for supporting the occupant (224,109) with attachment means (232);
a support for attaching the occupant support mechanism to the vehicle (235/222/221,101/102);
and a plurality of connection means (234 A/ 239/ 234B, 233/111 /107/102, 111/107/102, 218/217) with shock absorption means, each with a first end attached to the attachment means of the occupant support mechanism and a second end attached to the support, wherein said plurality of connection means enable the reorientation of the occupant support mechanism with an angular displacement towards facing the direction of acceleration by displacing the first ends of the plurality of connection means in a plurality of directions, under transient acceleration conditions of the support, to increase the support surface area of the occupant by the occupant support mechanism in the direction of said acceleration, said reorientation being enabled in part by the inertial loading of the occupant support mechanism and the occupant due to said acceleration conditions relative to said support, and the reaction forces of said plurality of connection means thereby reducing the peak force per unit area on said occupant during said acceleration of the support.

2. A vehicle structure according to claim 1, wherein said plurality of connection means are slides (111/107/102, 239, 218/217), with a plurality of axes with each slide comprising a first sliding surface with two ends in the sliding direction and comprising a means to attach to said occupant support mechanism, and a second sliding surface with two ends in the direction of sliding and comprising means to attach to said support.

3. A vehicle structure according to any of the preceding claims, wherein the means to attach the first end of at least one of said plurality of connection means to the occupant support mechanism comprises a pivot (234A, 233).

4. A vehicle structure according to any of the preceding claims wherein the means to attach the second end of at least one of said plurality of said connection means to the support comprises a pivot (234B).

5. A structure according to any of the preceding claims wherein the occupant support mechanism comprises multiple elements that may be relocated relative to each other for the comfort of the occupant.

6. A structure according to any of the preceding claims, wherein said structure has an extended position, which eases access to the vehicle.

7. A structure according to any of the preceding claims, wherein said transient acceleration is caused by an impact on said vehicle.

8. A structure according to any of the preceding claims, wherein said transient acceleration is in a substantially lateral direction with regard to the occupant support mechanism.

9. A structure according to any of the preceding claims wherein at least one of said reaction forces of said plurality of connection means is enabled with a shock-absorbing device.

10. A structure according to claims 2, 3, 4, 5, 6, 7, 8 and 9, wherein at least one of the pairs of sliding surfaces in the sliding arrangement are attached prior to said transient acceleration and are decoupled (107/111) at the time of said transient acceleration, and wherein said decoupling is enabled in part by the inertial loading caused by said transient acceleration with regard to the support.

11. A structure according to any of the preceding claims, wherein the extended position, enables access to the vehicle by orienting the occupant support mechanism to face outside the vehicle.

12. A structure according to claim 11, wherein the motion of the occupant support mechanism from the operating position to the extended position is enabled in part by rotation about a pivotal axis (233).

13. A structure according to claim 11, as dependant on claim 2, wherein the motion of the occupant support mechanism from the operating position to the extended position comprises a lateral movement of the occupant.

14. A structure according to claim 9, wherein the motion of the occupant support mechanism from the operating position to the extended position is enabled in part by disengagement of at least one shock absorbing device.

15. A structure according to claim 14, wherein the disengagement of the at least one shock absorber is enabled by displacement of a pin.

16. A structure according to any of the preceding claims , further comprising a horizontal axis lateral to the vehicle, wherein the occupant support mechanism is enabled to rotate about said axis in the event of a transient acceleration in the direction of motion of the vehicle, said occupant support mechanism comprising a safety harness, that engages the head and neck when the occupant support mechanism rotates about said axis thereby protecting the occupant.

17. A method for protecting an occupant in a vehicle with a vehicle structure according to any preceding claim in an operating position comprising:
attaching a support to the vehicle;
attaching an occupant support mechanism to the occupant;
attaching said occupant support mechanism with the occupant to a first end of each of a plurality of connection means;
attaching said support to a second end of each of a plurality of connection means;
wherein, in the event of a transient acceleration, said occupant support mechanism with occupant is enabled to reorient said occupant in a predetermined controlled fashion by displacing the first ends of the plurality of connection means in a plurality of directions, such that a surface area of support of said occupant by said occupant support mechanism is increased.

18. A structure according to any of claims 1 to 16, wherein the plurality of connection means for the occupant support mechanism to the support provides support forces on the occupant support mechanism in a direction opposite to and in a region surrounding a vector of inertial loading force caused by said transient acceleration of the occupant and the occupant support mechanism through the center of mass thereof, thereby said support forces in conjunction with said inertial loading provide a controlled torque that reorients said occupant support to a secure position.

19. A structure according to claim 18, wherein said plurality of connection means are sliding means (111/107, 239, 217/218), with a plurality of axes with each sliding means comprising a first sliding surface with two ends in the sliding direction and comprising a means to attach to said occupant support mechanism, and a second sliding surface with two ends in the direction of sliding and comprising means to attach to said support.

20. A structure according to claims 18 and 19, wherein the means to attach the first end of at least one of said plurality of connection means to the occupant support mechanism comprises a pivoting arrangement.

21. A structure according to claims 18, 19 and 20, wherein the means to attach the second end of at least one of said plurality of said connection means to the support comprises a pivoting arrangement.

22. A structure according to claim 18, 19, 20 and 21 wherein the controlled motion of the occupant support mechanism attached to the occupant is enabled in part with shock absorbing elements.

23. A structure according to claim 19, 20, 21 and 22, wherein the controlled motion is preceded by a decoupling of the first face from the second face of at least one of said slides.

24. A structure according to any of the preceding claims, wherein said occupant support mechanism is braced laterally to minimize crush injury to the occupant.

25. A structure according to any of the preceding claims wherein said occupant support mechanism is relocated following an intrusion of the vehicle caused by an impact enabled in part by said sliding arrangement thereby reducing possible crush injury to said occupant.

26. A structure according to any of the preceding claims wherein the occupant is a child.

27. A structure according to any of the preceding claims wherein the occupant support mechanism is a seat.

## Patentansprüche

1. Fahrzeugstruktur zum Schutz eines Insassen in einer Bedienstellung, umfassend:
Insassenhaltemechanismus zum Halten des Insassen (224, 109) mit Befestigungsmitteln (232),
Halterung zur Befestigung des Insassenhaltemechanismus am Fahrzeug (235/222/221, 101/102) und
eine Vielzahl von Verbindungsmitteln (234 A/ 239/ 234B, 2331111/107/102, 111/107/102, 218/217) mit stoßdämpfenden Mitteln, bei denen jeweils das erste Ende mit den Befestigungsmitteln des Insassenhaltemechanismus und das zweite Ende mit der Halterung verbunden ist, wobei die Vielzahl von Verbindungsmitteln die Neuausrichtung des Insassenhaltemechanismus mit einer Winkeldrehung in Beschleunigungsrichtung ermöglicht, indem die jeweils ersten Enden der Vielzahl von Befestigungsmechanismen sich in einer Situation mit vorübergehender Beschleunigung der Halterung in eine Vielzahl von Richtungen drehen, um die Stützfläche des Insassen durch den Insassenhaltemechanismus in Richtung der Beschleunigung zu vergrößern, wobei die Neuausrichtung teilweise durch die Trägheitslast des Insassenhaltemechanismus und des Insassen aufgrund der Beschleunigungsbedingungen relativ zur Halterung ermöglicht wird und durch die Reaktionskräfte der Vielzahl von Verbindungsmitteln, so dass die auf den Insassen wirkende Spitzenkraft pro Flächeneinheit während der Beschleunigung der Halterung reduziert wird.

2. Fahrzeugstruktur nach Anspruch 1, bei der die Vielzahl von Verbindungsmitteln Gleitungen (111/107/102, 239, 218/217) mit einer Vielzahl von Achsen sind, wobei jede Gleitung aus einer ersten Gleitfläche mit zwei Enden in Gleitrichtung, die ein Mittel zur Befestigung am Insassenhaltemechanismus umfasst, sowie einer zweiten Gleitfläche mit zwei Enden in Gleitrichtung, die ein Mittel zur Befestigung an der Halterung umfasst, besteht.

3. Fahrzeugstruktur nach einem der vorhergehenden Ansprüche, bei der das Mittel zur Befestigung des ersten Endes von mindestens einem Verbindungsmittel der Vielzahl von Verbindungsmitteln am Insassenhaltemechanismus einen Drehzapfen beinhaltet (234A, 233).

4. Fahrzeugstruktur nach einem der vorhergehenden Ansprüche, bei der das Mittel zur Befestigung des zweiten Endes von mindestens einem Verbindungsmittel der Vielzahl von Verbindungsmitteln an der Halterung einen Drehzapfen beinhaltet (234B).

5. Struktur nach einem der vorhergehenden Ansprüche, bei der der Insassenhaltemechanismus mehrere Komponenten enthält, die für einen erhöhten Komfort des Insassen in Bezug zueinander bewegt werden können.

6. Struktur nach einem der vorhergehenden Ansprüche, bei der die Struktur eine ausgefahrene Stellung hat, die das Einsteigen in das Fahrzeug erleichtert.

7. Struktur nach einem der vorhergehenden Ansprüche, bei der die vorübergehende Beschleunigung durch einen Aufprall auf das Fahrzeug verursacht wird.

8. Struktur nach einem der vorhergehenden Ansprüche, bei der die vorübergehende Beschleunigung wesentlich in seitlicher Richtung zum Insassenhaltemechanismus verläuft.

9. Struktur nach einem der vorhergehenden Ansprüche, bei der mindestens eine der Reaktionskräfte der Vielzahl von Verbindungsmitteln durch eine stoßdämpfende Vorrichtung ermöglicht wird.

10. Struktur nach den Ansprüchen 2, 3, 4, 5, 6, 7, 8 und 9, bei der mindestens eines der Gleitflächenpaare der Gleitvorrichtung vor der vorübergehenden Beschleunigung befestigt ist und zum Zeitpunkt der vorübergehenden Beschleunigung entkoppelt wird (107/111) und bei der die genannte Entkoppelung teilweise durch die Trägheitslast ermöglicht wird, die durch die vorübergehende Beschleunigung im Bezug zur Halterung verursacht wird.

11. Struktur nach einem der vorhergehenden Ansprüche, bei der die ausgefahrene Stellung das Einsteigen in das Fahrzeug ermöglicht, indem der Insassenhaltemechanismus zur Außenseite des Fahrzeugs ausgerichtet wird.

12. Struktur nach Anspruch 11, wobei die Bewegung des Insassenhaltemechanismus von der Bedienstellung in die ausgefahrene Stellung teilweise durch Rotation um eine Schwenkachse (233) ermöglicht wird.

13. Struktur nach Anspruch 11, soweit auf Anspruch 2 rückbezogen, bei der die Bewegung des Insassenhaltemechanismus von der Bedienstellung in die ausgefahrene Stellung eine seitliche Bewegung des Insassen umfasst.

14. Struktur nach Anspruch 9, bei der die Bewegung des Insassenhaltemechanismus von der Bedienstellung in die ausgefahrene Stellung teilweise durch das Lösen mindestens einer stoßdämpfenden Vorrichtung ermöglicht wird.

15. Struktur nach Anspruch 14, bei der das Lösen mindestens einer stoßdämpfenden Vorrichtung durch das Entfernen eines Stifts ermöglicht wird.

16. Struktur nach einem der vorhergehenden Ansprüche, die zusätzlich eine horizontale Achse, seitlich zum Fahrzeug, umfasst, wodurch der Insassenhaltemechanismus im Fall einer vorübergehenden Beschleunigung in Bewegungsrichtung des Fahrzeugs um diese Achse rotieren kann, wobei der Insassenhaltemechanismus ein Sicherheitsgurtwerk umfasst, das Kopf und Nacken fixiert, wenn der Insassenhaltemechanismus um die Achse rotiert, wodurch der Fahrzeuginsasse geschützt wird.

17. Verfahren zum Schutz eines Insassen in einem Fahrzeug mit einer Fahrzeugstruktur nach einem der vorhergehenden Ansprüche in einer Bedienstellung, umfassend:
Befestigen einer Halterung am Fahrzeug,
Befestigen eines Insassenhaltemechanismus am Insassen,
Befestigen des Insassenhaltemechanismus mit dem Insassen an einem ersten Ende der einzelnen Verbindungsmittel einer Vielzahl von Verbindungsmitteln,
Befestigen der Halterung an einem zweiten Ende der einzelnen Verbindungsmittel einer Vielzahl von Verbindungsmitteln,
wobei im Fall einer vorübergehenden Beschleunigung der Insassenhaltemechanismus mit dem Insassen den Insassen in einer vorgegebenen, kontrollierten Weise neu ausrichten kann, indem die ersten Enden der Vielzahl von Verbindungsmitteln in einer Vielzahl von Richtungen verschoben werden, so das die den Insassen stützende Oberfläche des Insassenhaltemechanismus vergrößert wird.

18. Struktur nach einem der Ansprüche 1 bis 16, bei der die Vielzahl von Verbindungsmitteln zwischen dem Insassenhaltemechanismus und der Halterung Haltekräfte auf den Insassenhaltemechanismus ausübt, die in einer Gegenrichtung zum und in einem Bereich um den Vektor der Kraft der Trägheitslast wirken, die durch die vorübergehende Beschleunigung des Insassen und des Insassenhaltemechanismus durch ihren Schwerpunkt verursacht wird, wodurch die Haltekräfte in Verbindung mit der Trägheitslast ein kontrolliertes Drehmoment verursachen, das den Insassenhaltemechanismus in eine sichere Stellung bewegt.

19. Struktur nach Anspruch 18, bei der die Vielzahl von Verbindungsmitteln Gleitvorrichtungen (111/107, 239, 217/218) mit einer Vielzahl von Achsen sind, wobei jede Gleitvorrichtung aus einer ersten Gleitfläche mit zwei Enden in Gleitrichtung, die ein Mittel zur Befestigung am Insassenhaltemechanismus umfasst, sowie einer zweiten Gleitung mit zwei Enden in Gleitrichtung, die ein Mittel zur Befestigung an der Halterung umfasst, besteht.

20. Struktur nach den Ansprüchen 18 und 19, bei der das Befestigungsmittel zur Befestigung des ersten Endes von mindestens einem Verbindungsmittel der genannten Vielzahl von Verbindungsmitteln am Insassenhaltemechanismus eine Drehvorrichtung beinhaltet.

21. Struktur nach den Ansprüchen 18, 19 und 20, bei der das Befestigungsmittel zur Befestigung des zweiten Endes von mindestens einem Verbindungsmittel der genannten Vielzahl von Verbindungsmitteln an der Halterung eine Drehvorrichtung beinhaltet.

22. Struktur nach den Ansprüchen 18, 19, 20 und 21, bei der die kontrollierte Bewegung des Insassenhaltemechanismus, der am Insassen befestigt ist, teilweise durch stoßdämpfende Komponenten ermöglicht wird.

23. Struktur nach den Ansprüchen 19, 20, 21 und 22, bei der der kontrollierten Bewegung eine Entkopplung der ersten Oberfläche von der zweiten Oberfläche von mindestens einer der genannten Gleitungen vorhergeht.

24. Struktur nach einem der vorhergehenden Ansprüche, bei der der Insassenhaltemechanismus über seitliche Verstärkungen verfügt, um Aufprallverletzungen des Insassen zu minimieren.

25. Struktur nach einem der vorhergehenden Ansprüche, bei der der Insassenhaltemechanismus nach einer Intrusion in das Fahrzeug durch einen Aufprall teilweise mithilfe der genannten Gleitvorrichtung verschoben wird, wodurch Aufprallverletzungen des Insassen minimiert werden.

26. Struktur nach einem der vorhergehenden Ansprüche, bei der der Insasse ein Kind ist.

27. Struktur nach einem der vorhergehenden Ansprüche, bei der Insassenhaltemechanismus ein Sitz ist.

## Revendications

1. Structure de véhicule destinée à protéger un occupant dans une position d'utilisation, **caractérisée en ce qu'**elle comprend :
un mécanisme de soutien d'occupant pour soutenir l'occupant (224, 109) par un moyen d'attache (232) ;
un support pour attacher le mécanisme de soutien d'occupant au véhicule (235/222/221, 101/102) ;
et une pluralité de moyens de liaison (234 A/ 239/ 234B, 233/111/107/102, 111/107/102, 218/217) avec des moyens d'amortissement des chocs, chacun ayant une première extrémité attachée au moyen d'attache du mécanisme de soutien d'occupant et une seconde extrémité attachée au support, ladite pluralité de moyens de liaison permettant la réorientation du mécanisme de soutien d'occupant selon un déplacement angulaire visant à faire face à la direction d'accélération par le déplacement des premières extrémités de la pluralité de moyens de liaison dans une pluralité de directions, sous des conditions d'accélération transitoire du support, de manière à accroître la surface de soutien de l'occupant par le mécanisme de soutien d'occupant dans la direction de ladite accélération, ladite réorientation étant en partie produite par la charge d'inertie du mécanisme de soutien d'occupant et par l'occupant sous l'effet desdites conditions d'accélération par rapport audit support, et les forces de réaction de ladite pluralité de moyens de liaison réduisant de ce fait la force maximale par unité de surface exercée sur ledit occupant durant ladite accélération du support.

2. Structure de véhicule selon la revendication 1, **caractérisée en ce que** ladite pluralité de moyens de liaison est constituée de coulisses (111/107/102, 239, 218/217), suivant une pluralité d'axes, **caractérisées en ce que** chaque coulisse comprend une première surface coulissante ayant deux extrémités dans la direction de coulissement et comprenant un moyen d'attache audit mécanisme de soutien d'occupant et une seconde surface coulissante ayant deux extrémités dans la direction de coulissement et comprenant un moyen d'attache audit support.

3. Structure de véhicule selon l'une quelconque des revendications précédentes, **caractérisée en ce que** le moyen d'attache de la première extrémité d'au moins l'un de ladite pluralité de moyens de liaison au mécanisme de soutien d'occupant comprend un pivot (234A, 233).

4. Structure de véhicule selon l'une quelconque des revendications précédentes, **caractérisée en ce que** le moyen d'attache de la seconde extrémité d'au moins l'un de ladite pluralité de moyens de liaison au support comprend un pivot (234B).

5. Structure selon l'une quelconque des revendications précédentes, **caractérisée en ce que** le mécanisme de soutien d'occupant comprend de multiples éléments pouvant être déplacés l'un par rapport à l'autre en vue du confort de l'occupant.

6. Structure selon l'une quelconque des revendications précédentes, **caractérisée en ce que** ladite structure présente une position déployée, qui facilite l'accès au véhicule.

7. Structure selon l'une quelconque des revendications précédentes, **caractérisée en ce que** ladite accélération transitoire est causée par un choc sur ledit véhicule.

8. Structure selon l'une quelconque des revendications précédentes, **caractérisée en ce que** ladite accélération transitoire se produit dans une direction essentiellement latérale par rapport au mécanisme de soutien d'occupant.

9. Structure selon l'une quelconque des revendications précédentes, **caractérisée en ce qu'**au moins l'une desdites forces de réaction de ladite pluralité de moyens de liaisons est produite par un dispositif amortisseur de chocs.

10. Structure selon les revendications 2, 3, 4, 5, 6, 7, 8 et 9, **caractérisée en ce qu'**au moins l'une des paires de surfaces coulissantes dans le mécanisme coulissant est attachée avant ladite accélération transitoire et découplée (107/111) au moment de ladite accélération transitoire et **caractérisée en ce que** ledit découplage est produit en partie par la charge d'inertie résultant de ladite accélération transitoire par rapport au support.

11. Structure selon l'une quelconque des revendications précédentes, **caractérisée en ce que** la position déployée permet l'accès au véhicule par orientation du mécanisme de soutien d'occupant de manière à faire face à l'extérieur du véhicule.

12. Structure selon la revendication 11, **caractérisée en ce que** le mouvement du mécanisme de soutien d'occupant de la position d'utilisation à la position déployée est produit en partie par la rotation autour d'un axe de pivotement (233).

13. Structure selon la revendication 11 lorsqu'elle dépend de la revendication 2, **caractérisée en ce que** le mouvement du mécanisme de soutien d'occupant de la position d'utilisation à la position déployée comprend un mouvement latéral de l'occupant.

14. Structure selon la revendication 9, **caractérisée en ce que** le mouvement du mécanisme de soutien d'occupant de la position d'utilisation à la position déployée est produit en partie par le désengagement d'au moins un dispositif amortisseur de chocs.

15. Structure selon la revendication 14, **caractérisée en ce que** le désengagement d'au moins un dispositif amortisseur de chocs est produit par le déplacement d'une broche.

16. Structure selon l'une quelconque des revendications précédentes, comportant en outre un axe horizontal latéral par rapport au véhicule, **caractérisée en ce que** le mécanisme de soutien d'occupant peut tourner autour dudit axe en présence d'une accélération transitoire dans la direction de déplacement du véhicule, ledit mécanisme de soutien d'occupant comportant un harnais de sécurité qui retient la tête et le cou lorsque le mécanisme de soutien d'occupant tourne autour dudit axe, de manière à protéger l'occupant.

17. Méthode de protection d'un occupant dans un véhicule équipé d'une structure selon l'une quelconque des revendications précédentes dans une position d'utilisation comprenant:
la fixation d'un support au véhicule ;
l'attachement d'un mécanisme de soutien d'occupant à un occupant ;
la fixation dudit mécanisme de soutien d'occupant avec l'occupant à une première extrémité de chacun d'une pluralité de moyens de liaison ;
la fixation dudit support à la seconde extrémité de chacun d'une pluralité de moyens de liaison ;
**caractérisée en ce que**, dans l'éventualité d'une accélération transitoire, ledit mécanisme de soutien d'occupant avec l'occupant est amené à réorienter ledit occupant d'une façon contrôlée préétablie par déplacement des premières extrémités de la pluralité de moyens de liaison dans une pluralité de directions, de telle manière que la surface de soutien dudit occupant par ledit mécanisme de soutien d'occupant est accrue.

18. Structure selon l'une quelconque des revendications 1 à 16, **caractérisée en ce que** la pluralité de moyens de liaison du mécanisme de soutien d'occupant au support exerce des forces de soutien sur le mécanisme de soutien d'occupant dans une direction opposée à, et dans une région entourant, un vecteur de force de charge d'inertie causé par ladite accélération transitoire de l'occupant et du mécanisme de soutien d'occupant à travers leur centre de gravité, de telle manière que lesdites forces de soutien, en conjonction avec ladite charge d'inertie, produisent un couple contrôlé qui réoriente ledit soutien d'occupant jusqu'à une position sûre.

19. Structure selon la revendication 18, **caractérisée en ce que** ladite pluralité de moyens de liaison est constituée de moyens de coulissement (111/107, 239, 217/218), suivant une pluralité d'axes, **caractérisés en ce que** chaque moyen de coulissement comprend une première surface coulissante ayant deux extrémités dans la direction de coulissement et comprenant un moyen d'attache audit mécanisme de soutien d'occupant et une seconde surface coulissante ayant deux extrémités dans la direction de coulissement et comprenant un moyen d'attache audit support.

20. Structure selon les revendications 18 et 19, **caractérisée en ce que** le moyen d'attache de la première extrémité d'au moins l'un de ladite pluralité de moyens de liaison au mécanisme de soutien d'occupant comprend un mécanisme pivotant.

21. Structure selon les revendications 18, 19 et 20, **caractérisée en ce que** le moyen d'attache de la seconde extrémité d'au moins l'un de ladite pluralité de moyens de liaison au support comprend un mécanisme pivotant.

22. Structure selon les revendications 18, 19, 20 et 21, **caractérisée en ce que** le mouvement contrôlé du mécanisme de soutien d'occupant attaché à l'occupant est produit en partie par les éléments amortisseurs de chocs.

23. Structure selon les revendications 18, 19, 20, 21 et 22, **caractérisée en ce que** le mouvement contrôlé est précédé par un découplage de la première face par rapport à la seconde face d'au moins l'une desdites coulisses.

24. Structure selon l'une quelconque des revendications précédentes, **caractérisée en ce que** ledit mécanisme de soutien d'occupant est renforcé latéralement pour minimiser les blessures par écrasement de l'occupant.

25. Structure selon l'une quelconque des revendications précédentes, **caractérisée en ce que** ledit mécanisme de soutien d'occupant est déplacé à la suite d'une intrusion du véhicule causée par un choc, en partie sous l'action dudit mécanisme coulissant, réduisant de ce fait le risque de blessure par écrasement dudit occupant.

26. Structure selon l'une quelconque des revendications précédentes, **caractérisée en ce que** l'occupant est un enfant.

27. Structure selon l'une quelconque des revendications précédentes, **caractérisée en ce que** le mécanisme de soutien d'occupant est un siège.
